# EUROPEAN PATENT SPECIFICATION

(11) **EP 4 253 257 B1**
(45) Date of publication and mention of the grant of the patent: **01.01.2025**
(21) Application number: 23161602.0
(22) Date of filing: 13.03.2023
(51) Int. Cl.: B64G 1/50, B64D 13/08, B64G 1/46, B60H 1/00, B64D 13/06, F28D 21/00

(54) **HEAT REJECTION BASED ON DYNAMIC CONTROL OVER A RANGE OF ALTITUDES**
WÄRMEABWEISUNG AUF BASIS VON DYNAMISCHER STEUERUNG ÜBER EINEN HÖHENBEREICH
REJET DE CHALEUR BASÉ SUR UNE COMMANDE DYNAMIQUE SUR UNE PLAGE D'ALTITUDES

(30) Priority: 28.03.2022 US 202263324287 P
(43) Date of publication of application: 04.10.2023
(73) Proprietor: Hamilton Sundstrand Space Systems International, Inc., Windsor Locks, CT 06096 (US)
(72) Inventor: HIMMELMANN, Ashley, Hartford, CT, 06103 (US); MUGURUSA, Diego S., North Haven, 06473 (US)
(74) Representative: Dehns

(56) References cited:
- EP-A1- 3 051 229
- CN-A- 105 485 834
- JP-A- 2002 310 551
- US-A1- 2012 248 242
- US-A1- 2018 031 332

## Description

### CROSS-REFERENCE TO RELATED APPLICATIONS

This application claims the benefit of U.S. Provisional Application No. 63/324,287 filed March 28, 2022.

### BACKGROUND

Exemplary embodiments pertain to the art of vehicle cabin air temperature control and, in particular, to heat rejection based on dynamic control over a range of altitudes.

Air temperature control is an important function in many environments (e.g., homes, businesses, vehicles) and often requires connection to a coolant loop heat sink. In an aircraft or space vehicle, the available means of heat rejection for the coolant loop is affected by different ambient environmental variations and other vehicle constraints (e.g., power consumption, mass, and volume). In a spacecraft, for example, external absolute pressure may change from approximately 101.4 kPa (14.7 pounds per square inch (psia)) on earth to near vacuum in space. The variations create challenges for controlling a coolant temperature in a heat exchanger that provides the cabin air. EP3051229A1 discloses a heat rejection system of the prior art.

### BRIEF DESCRIPTION

In one exemplary embodiment, a heat rejection system in a vehicle includes a heat exchanger to take in input coolant and to output a warmed coolant, a heat of vaporization device (HVD), and a heat of fusion device (HFD). The heat rejection system also includes a controller to direct the warmed coolant to the HVD or to the HFD based on an input, wherein the input indicates altitude of the vehicle or ambient pressure.

In addition to one or more of the features described herein, the heat rejection system also includes a first valve and a second valve. The controller controls the first valve to direct a flow of the warmed coolant to the HVD or to the second valve and to control the second valve to direct a flow of the warmed coolant or a flow of an output of the HVD to the HFD or to direct the flow of the output of the HVD to the heat exchanger as the input coolant.

In addition to one or more of the features described herein, the warmed coolant is water.

In addition to one or more of the features described herein, the HVD is a water membrane evaporator (WME).

In addition to one or more of the features described herein, the WME includes a hydrophobic membrane through which the water flows and evaporation of the water at a surface of the hydrophobic membrane results in heat rejection.

In addition to one or more of the features described herein, the HFD is a water and ice heat exchanger (WIHX).

In addition to one or more of the features described herein, the water interacts with ice in the WIHX and heat rejection results in melting of the ice.

In addition to one or more of the features described herein, the heat rejection system also includes a filter at an output of the WIHX to prevent ice from exiting the WIHX.

In addition to one or more of the features described herein, the heat rejection system also includes a pump disposed between the heat exchanger and the first valve.

In addition to one or more of the features described herein, the vehicle is a spacecraft.

In another exemplary embodiment, a method of assembling a heat rejection system for a vehicle includes arranging a heat exchanger configured to take in input coolant and to output a warmed coolant. The method also includes assembling a heat of vaporization device (HVD), assembling a heat of fusion device (HFD), and configuring a controller to direct the warmed coolant to the HVD or to the HFD based on an input. The input indicates altitude of the vehicle or ambient pressure.

In addition to one or more of the features described herein, the method also includes arranging a first valve and a second valve. The configuring the controller includes the controller controlling the first valve to direct a flow of the warmed coolant to the HVD or to the second valve and controlling the second valve to direct a flow of the warmed coolant or a flow of an output of the HVD to the HFD or to direct the flow of the output of the HVD to the heat exchanger as the input coolant.

In addition to one or more of the features described herein, the warmed coolant is water.

In addition to one or more of the features described herein, the assembling the HVD includes assembling a water membrane evaporator (WME).

In addition to one or more of the features described herein, the assembling the WME includes arranging a hydrophobic membrane through which the water flows and evaporation of the water at a surface of the hydrophobic membrane results in heat rejection.

In addition to one or more of the features described herein, the assembling the HFD includes assembling a water and ice heat exchanger (WIHX).

In addition to one or more of the features described herein, the assembling the WIHX includes filling the WIHX with ice such that water interacts with ice in the WIHX and heat rejection results in melting of the ice.

In addition to one or more of the features described herein, the method also includes arranging a filter at an output of the WIHX to prevent ice from exiting the WIHX.

In addition to one or more of the features described herein, the method also includes disposing a pump between the heat exchanger and the first valve.

In addition to one or more of the features described herein, the vehicle is a spacecraft.

### BRIEF DESCRIPTION OF THE DRAWINGS

The following descriptions should not be considered limiting in any way. With reference to the accompanying drawings, like elements are numbered alike:
FIG. 1 is a block diagram of a heat rejection system according to one or more embodiments;
FIG. 2 is a block diagram of a heat rejection system with a pressurized accumulator according to one or more embodiments; and
FIG. 3 is a process flow of a method of performing heat rejection according to one or more embodiments.

### DETAILED DESCRIPTION

A detailed description of one or more embodiments of the disclosed apparatus and method are presented herein by way of exemplification and not limitation with reference to the Figures.

Embodiments of the systems and methods detailed herein relate to heat rejection based on dynamic control over a range of altitudes. A cabin air heat exchanger may be used to cool air for reuse in a vehicle cabin. The heat rejection detailed herein is for the coolant supplied to the cabin air heat exchanger. For explanatory purposes, water is assumed as the exemplary coolant for which heat rejection is implemented. However, any coolant material may be used if it is selected with consideration of the pressure differences discussed herein. Heat is rejected via vaporization and/or via fusion based on dynamic control according to the altitude of the vehicle and the associated absolute ambient pressure (i.e., pressure of the external environment).

As detailed, at lower altitudes (e.g., on the earth's surface with an absolute ambient pressure around 14.7 psia), heat may be rejected from the coolant only via fusion. At very high altitudes (e.g., in space with a near 0 psia), heat may sufficiently also be rejected via vaporization. At altitudes between earth and space, heat rejection via vaporization may not cool the coolant sufficiently such that both vaporization and fusion are implemented. By using fusion, vaporization, or a combination of the two based on altitude (and corresponding external pressure), the coolant (e.g., water) that is lost to the vaporization may be replenished with melted ice resulting from the fusion. Overall, the heat rejection process according to one or more embodiments benefits from requiring less replenishment (and, thus, transport) of coolant.

In the exemplary case of the coolant being water, heat rejection via vaporization (i.e., with a heat of vaporization device (HVD)) may be accomplished via a water membrane evaporator (WME) and heat rejection via fusion (i.e., with a heat of fusion device (HFD)) may be accomplished via a water/ice heat exchanger (WIHX). Unlike prior WIHX devices, the coolant (e.g., water) is not routed through the ice while being kept separated from the ice via piping. Instead, according to one or more embodiments, the water used as the coolant interacts with the ice such that any water that results from the ice melting is added to the coolant loop. In this way, replenishment of water lost in the WME as vapor via vaporization may be needed less frequently, thereby reducing the amount and weight of water or ice that must be carried in the vehicle. The WIHX may also act as an accumulator for the coolant system. Thus, as previously noted, using both the WME and the WIHX reduces the need for replenishment of the coolant, which must be transported in the vehicle.

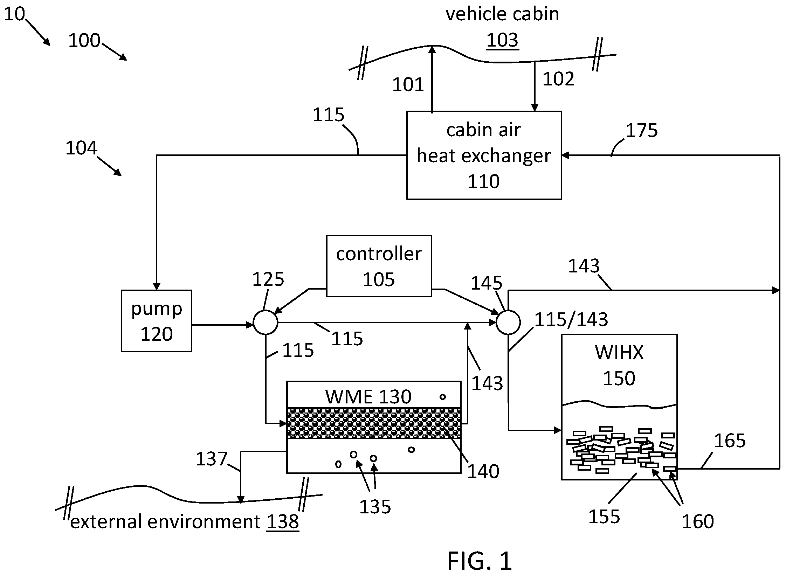

FIG. 1 is a block diagram of a heat rejection system 100 in a vehicle 10 according to one or more embodiments. As previously noted, the heat rejection system 100 may be used with a cabin air heat exchanger 110, as shown. Generally, warm cabin air 102 and input coolant 175 interact in the cabin air heat exchanger 110. The result is cool cabin air 101 that is provided to the vehicle cabin 103 and warmed coolant 115 that must be cooled in a coolant loop 104. Heat rejection is implemented in the coolant loop 104 by the heat rejection system 100 to cool down the warmed coolant 115 and produce input coolant 175. As previously noted, the specific heat rejection that is implemented may be altitude specific and may be controlled by the controller 105. As also noted, as altitude increases, ambient pressure (pressure of the external environment 138) decreases.

The warmed coolant 115 is provided to a pump 120 that keeps the coolant moving through the coolant loop 104. The controller 105 controls two controlled valves 125 and 145 to determine whether the WME 130 and the WIHX 150 participate in the heat rejection. The controller 105 controls the two controlled valves 125, 145 based on altitude and a corresponding ambient pressure (i.e., pressure of the external environment 138). This control is summarized in Table 1, which indicates the input to the WME 130 and to the WIHX 150 at different altitudes / pressure differences.

A scenario involving a relatively low altitude (i.e., a relatively high ambient pressure and a relatively low corresponding pressure difference) is discussed first. This scenario may occur on the earth's surface, for example, where the absolute ambient pressure is about 14.7 psia. In this case, as Table 1 indicates, none of the warmed coolant 115 may be input to the WME 130. Instead, the controller 105 may control the controlled valve 125 to direct the warmed coolant 115 to the controlled valve 145, which is controlled to direct the warmed coolant 115 to the WIHX 150.

The warmed coolant 115, assumed to be water for explanatory purposes, mixes with the ice 160 in the WIHX 150. Based on the temperature of the warmed coolant 115, some of the ice 160 may melt. The water 155 in the WIHX 150 is cooler than the warmed coolant 115 based on the heat rejection via fusion with the ice 160. This cooler water 155 is output by the WIHX 150 as the WIHX output 165. In this scenario, there is no WME output 143 (i.e., the WME 130 is bypassed). Thus, the WIHX output 165 is the input coolant 175 to the cabin air heat exchanger 110.

A scenario involving a relatively high altitude (i.e., a relatively low ambient pressure and a relatively high corresponding pressure difference) is addressed next. This scenario may occur in space, for example, where the absolute ambient pressure is about 0 psia. In this case, as Table 1 indicates, the warmed coolant 115 is input to the WME 130 and nothing is input to the WIHX 150 (i.e., the WIHX 150 is bypassed). That is, the controller 105 controls the controlled valve 125 to direct the warmed coolant 115 to the WME 130 and controls the controlled valve 145 to direct the WME output 143 to the cabin air heat exchanger 110 as the input coolant 175.

In the WME 130, the warmed coolant 115, which is assumed to be water for explanatory purposes, flows through a membrane 140. The membrane 140 is a hydrophobic membrane that passively controls the water liquid/vapor interface. At the membrane 140, water flowing through evaporates and passes out of the membrane 140 as gas 135 (i.e., water vapor in the case of the warmed coolant 115 being water). The gas 135 is vented to the external environment 138 via a vacuum vent line 137, as shown. This heat rejection via evaporation during flow through the membrane 140 results in the WME output 143 being cooler than the warmed coolant 115 that enters the WME 130.

A scenario involving an altitude and corresponding ambient pressure in between the relatively low and relatively high altitudes/ambient pressures may occur during aircraft or spacecraft flight. For example, at an altitude of 30,480 m (100,000 feet (ft)), the ambient pressure may be sufficiently high to obtain a WME output 143 of 10 °C (50 degrees Fahrenheit), the desired temperature for the input coolant 175. However, at an altitude of 27,432 m (90,000 ft), the ambient pressure may be such that the WME 130 provides a WME output 143 with a temperature of 16 °C (60 degrees Fahrenheit). In this case, as indicated in Table 1, the WME output 143 may additionally be directed to the WIHX 150 based on the controller 105 controlling the controlled valve 145. The WME output 143 may be further cooled by the WIHX 150 such that the WIHX output 165 is provided as the input coolant 175 at the desired temperature of 10 °C (50 degrees Fahrenheit).

The controller 105 may include one or more memory devices and processors to perform the control of the controlled valves 125, 145. The heat rejection from the warmed coolant 115 is based on dynamic control of the controlled valves 125, 145 by the controller 105. This dynamic control accounts for the fact that the WME 130, WIHX 150, or both are needed according to ambient pressure and the difference between the pressure of the warmed coolant 115 and the absolute ambient pressure. Because the ambient pressure and pressure difference varies with altitude, the control of the controlled valves 125, 145 may be based on altitude. The control may also be predetermined and static, following set points obtained analytically or experimentally.

The controller 105 may obtain an input of the current altitude and may use the altitude as the basis for control of the controlled valves 125, 145. Alternately or additionally, the controller 105 may obtain an input of the absolute ambient pressure and may map the pressure value to a control scheme for the controlled valves 125, 145. Alternately or additionally, the controller 105 may obtain an input of the temperature of the warmed coolant 115 at the input to the controlled valve 125 and the temperature of the WME output 143 at the input to the controlled valve 145 to determine where to direct flow through each of the controlled valves 125, 145. According to alternate embodiments, the controller 105 may implement machine learning to obtain input (e.g., altitude, absolute ambient pressure) and determine corresponding control of the controlled valves 125, 145.

**Table 1. Inputs to WME and WIHX based on pressure difference.**

| altitude / ambient pressure | input to WME | input to WIHX |
|---|---|---|
| low / high | none | warmed coolant |
| high / low | warmed coolant | none |
| in between | warmed coolant | WME output |

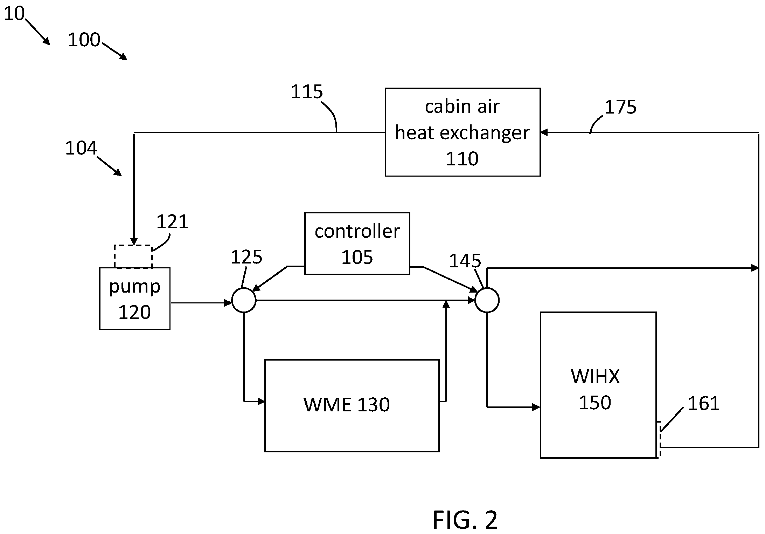

FIG. 2 is a block diagram of a heat rejection system 100 according to one or more embodiments. As FIG. 2 shows, most of the components of the coolant loop 104 are the same as those discussed with reference to FIG. 1. These components are not discussed again. Additional components include an optional gas trap 121 is shown at the inlet of the pump 120. The gas trap 121 may be used to prevent cavitation. In addition, the WIHX 150 is shown with an optional filter 161 that prevents ice from entering the coolant loop 104.

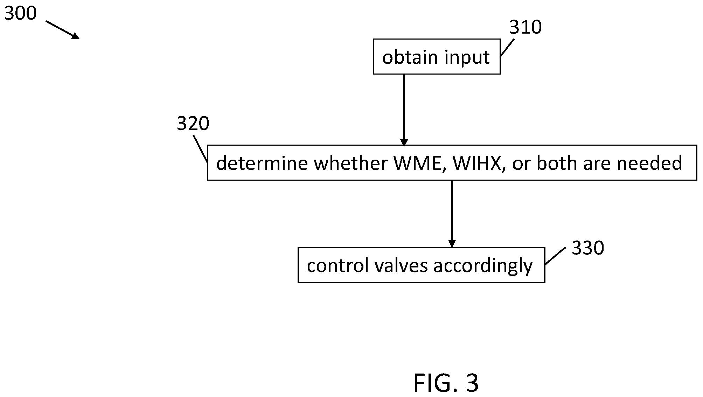

FIG. 3 is a process flow of a method 300 of performing heat rejection according to one or more embodiments. The processes may be performed by the controller 105. At block 310, obtaining input refers to obtaining altitude, ambient pressure, and/or temperature of the warmed coolant 115 and WME output 143, as previously noted. At block 320, determining whether the WME 130, WIHX 150, or both are needed may be based on a mapping (e.g., altitude or pressure difference is mapped to actions as indicated in Table 1, for example) or may be based on machine learning. At block 330, controlling the controlled valves 125, 145 is based on the determination (e.g., mapping, machine learning) at block 320.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A heat rejection system (100) for a vehicle, the heat rejection system comprising:
a heat exchanger (110) configured to take in input coolant (175) and to output a warmed coolant (115);
a heat of vaporization device, HVD;
a heat of fusion device, HFD;
a controller (105) configured to direct the warmed coolant to the HVD or to the HFD based on an input, **characterised in that** the input indicates altitude of the vehicle or ambient pressure.

2. The heat rejection system according to claim 1, further comprising a first valve and a second valve, wherein the controller (105) is configured to control the first valve to direct a flow of the warmed coolant (115) to the HVD or to the second valve and to control the second valve to direct a flow of the warmed coolant (115) or a flow of an output of the HVD to the HFD or to direct the flow of the output of the HVD to the heat exchanger (110) as the input coolant (175).

3. The heat rejection system according to claim 2, wherein the warmed coolant (115) is water.

4. The heat rejection system according to claim 3, wherein the HVD is a water membrane evaporator, WME (130), and preferably wherein the WME (130) includes a hydrophobic membrane through which the water flows and evaporation of the water at a surface of the hydrophobic membrane results in heat rejection.

5. The heat rejection system according to claim 3, wherein the HFD is a water and ice heat exchanger, WIHX (150).

6. The heat rejection system according to claim 5, wherein the water interacts with ice in the WIHX (150) and heat rejection results in melting of the ice; and/or further comprising a filter at an output of the WIHX (150) to prevent ice from exiting the WIHX (150).

7. The heat rejection system according to any of claims 2-6, further comprising a pump (120) disposed between the heat exchanger (110) and the first valve.

8. The heat rejection system according to any preceding claim, wherein the vehicle is a spacecraft.

9. A method of assembling a heat rejection system for a vehicle, the method comprising:
arranging a heat exchanger (110) configured to take in input coolant (175) and to output a warmed coolant (115);
assembling a heat of vaporization device, HVD;
assembling a heat of fusion device, HFD; and
configuring a controller (105) to direct the warmed coolant to the HVD or to the HFD based on an input, **characterised in that** the input indicates altitude of the vehicle or ambient pressure.

10. The method according to claim 9, further comprising arranging a first valve and a second valve, wherein the configuring the controller includes the controller controlling the first valve to direct a flow of the warmed coolant to the HVD or to the second valve and controlling the second valve to direct a flow of the warmed coolant or a flow of an output of the HVD to the HFD or to direct the flow of the output of the HVD to the heat exchanger as the input coolant.

11. The method according to claim 10, wherein the warmed coolant is water.

12. The method according to claim 11, wherein the assembling the HVD includes assembling a water membrane evaporator, WME, and preferably wherein the assembling the WME includes arranging a hydrophobic membrane through which the water flows and evaporation of the water at a surface of the hydrophobic membrane results in heat rejection.

13. The method according to claim 11, wherein the assembling the HFD includes assembling a water and ice heat exchanger, WIHX.

14. The method according to claim 13, wherein the assembling the WIHX includes filling the WIHX with ice such that water interacts with ice in the WIHX and heat rejection results in melting of the ice; and/or further comprising arranging a filter at an output of the WIHX to prevent ice from exiting the WIHX.

15. The method according to any of claims 10-14, further comprising disposing a pump between the heat exchanger and the first valve.

## Patentansprüche

1. Wärmeabweisungssystem (100) für ein Fahrzeug, wobei das Wärmeabweisungssystem umfasst:
einen Wärmetauscher (110), der dazu konfiguriert ist,
Eingangskühlmittel (175) aufzunehmen und ein erwärmtes Kühlmittel (115) auszugeben;
eine Verdampfungswärmevorrichtung (heat of vaporization device - HVD);
eine Fusionswärmevorrichtung (heat of fusion device - HFD);
eine Steuerung (105), die dazu konfiguriert ist, das erwärmte Kühlmittel auf Basis einer Eingabe zu der HVD oder der HFD zu leiten, **dadurch gekennzeichnet, dass** die Eingabe die Höhe des Fahrzeugs oder den Umgebungsdruck angibt.

2. Wärmeabweisungssystem nach Anspruch 1, ferner umfassend ein erstes Ventil und ein zweites Ventil, wobei die Steuerung (105) dazu konfiguriert ist, das erste Ventil zu steuern, um einen Strom des erwärmten Kühlmittels (115) zu der HVD oder zu dem zweiten Ventil zu leiten, und das zweite Ventil zu steuern, um einen Strom des erwärmten Kühlmittels (115) oder einen Strom eines Ausgangs der HVD zu der HFD zu leiten oder den Strom des Ausgangs der HVD als Eingangskühlmittel (175) zu dem Wärmetauscher (110) zu leiten.

3. Wärmeabweisungssystem nach Anspruch 2, wobei das erwärmte Kühlmittel (115) Wasser ist.

4. Wärmeabweisungssystem nach Anspruch 3, wobei die HVD ein Wassermembranverdampfer (water membrane evaporator - WME) (130) ist und wobei der WME (130) vorzugsweise eine hydrophobe Membran beinhaltet, durch die das Wasser strömt, und die Verdampfung des Wassers an einer Oberfläche der hydrophoben Membran zu einer Wärmeabweisung führt.

5. Wärmeabweisungssystem nach Anspruch 3, wobei die HFD ein Wasser- und Eis-Wärmetauscher (water and ice heat exchanger - WIHX) (150) ist.

6. Wärmeabweisungssystem nach Anspruch 5, wobei das Wasser mit Eis in dem WIHX (150) interagiert und die Wärmeabweisung zum Schmelzen des Eises führt; und/oder ferner umfassend einen Filter an einem Ausgang des WIHX (150), um zu verhindern, dass Eis aus dem WIHX (150) austritt.

7. Wärmeabweisungssystem nach einem der Ansprüche 2-6, ferner umfassend eine Pumpe (120), die zwischen dem Wärmetauscher (110) und dem ersten Ventil angeordnet ist.

8. Wärmeabweisungssystem nach einem der vorhergehenden Ansprüche, wobei das Fahrzeug ein Raumfahrzeug ist.

9. Verfahren zum Montieren eines Wärmeabweisungssystems für ein Fahrzeug, wobei das Verfahren Folgendes umfasst:
Anordnen eines Wärmetauschers (110), der dazu konfiguriert ist, Eingangskühlmittel (175) aufzunehmen und ein erwärmtes Kühlmittel (115) auszugeben;
Montieren einer Verdampfungswärmevorrichtung (HVD);
Montieren einer Fusionswärmevorrichtung (HFD); und
Konfigurieren einer Steuerung (105), damit sie das erwärmte Kühlmittel auf Basis einer Eingabe zu der HVD oder der HFD leitet, **dadurch gekennzeichnet, dass** die Eingabe die Höhe des Fahrzeugs oder den Umgebungsdruck angibt.

10. Verfahren nach Anspruch 9, ferner umfassend Anordnen eines ersten Ventils und eines zweiten Ventils, wobei das Konfigurieren der Steuerung beinhaltet, dass die Steuerung das erste Ventil steuert, um einen Strom des erwärmten Kühlmittels zu der HVD oder zu dem zweiten Ventil zu leiten, und das zweite Ventil steuert, um einen Strom des erwärmten Kühlmittels oder einen Strom eines Ausgangs der HVD zu der HFD zu leiten oder den Strom des Ausgangs der HVD als Eingangskühlmittel zu dem Wärmetauscher zu leiten.

11. Verfahren nach Anspruch 10, wobei das erwärmte Kühlmittel Wasser ist.

12. Verfahren nach Anspruch 11, wobei das Montieren der HVD Montieren eines Wassermembranverdampfers (WME) beinhaltet und wobei das Montieren des WME vorzugsweise Anordnen einer hydrophoben Membran beinhaltet, durch die das Wasser strömt, und die Verdampfung des Wassers an einer Oberfläche der hydrophoben Membran zu einer Wärmeabweisung führt.

13. Verfahren nach Anspruch 11, wobei das Montieren der HFD Montieren eines Wasser- und Eis-Wärmetauschers (WIHX) beinhaltet.

14. Verfahren nach Anspruch 13, wobei das Montieren des WIHX Füllen des WIHX mit Eis beinhaltet, sodass Wasser mit dem Eis in dem WIHX interagiert und die Wärmeabweisung zum Schmelzen des Eises führt; und/oder ferner umfassend Anordnen eines Filters an einem Ausgang des WIHX, um zu verhindern, dass Eis aus dem WIHX austritt.

15. Verfahren nach einem der Ansprüche 10-14, ferner umfassend Anordnen einer Pumpe zwischen dem Wärmetauscher und dem ersten Ventil.

## Revendications

1. Système de rejet de chaleur (100) pour un véhicule, le système de rejet de chaleur comprenant :
un échangeur de chaleur (110) configuré pour recevoir un liquide de refroidissement d'entrée (175) et pour délivrer un liquide de refroidissement réchauffé (115) ;
un dispositif de vaporisation de chaleur, HVD ;
un dispositif à chaleur de fusion, HFD ;
un contrôleur (105) configuré pour diriger le liquide de refroidissement réchauffé vers le HVD ou vers le HFD sur la base d'une entrée, **caractérisé en ce que** l'entrée indique l'altitude du véhicule ou la pression ambiante.

2. Système de rejet de chaleur selon la revendication 1, comprenant également une première vanne et une seconde vanne, dans lequel le contrôleur (105) est configuré pour commander la première vanne pour diriger un flux du liquide de refroidissement réchauffé (115) vers le HVD ou vers la seconde vanne et pour commander la seconde vanne pour diriger un flux du liquide de refroidissement réchauffé (115) ou un flux d'une sortie du HVD vers le HFD ou pour diriger le flux de la sortie du HVD vers l'échangeur de chaleur (110) en tant que liquide de refroidissement d'entrée (175).

3. Système de rejet de chaleur selon la revendication 2, dans lequel le liquide de refroidissement réchauffé (115) est de l'eau.

4. Système de rejet de chaleur selon la revendication 3, dans lequel le HVD est un évaporateur à membrane d'eau, WME (130), et de préférence dans lequel le WME (130) comprend une membrane hydrophobe à travers laquelle l'eau s'écoule et l'évaporation de l'eau à une surface de la membrane hydrophobe entraîne un rejet de chaleur.

5. Système de rejet de chaleur selon la revendication 3, dans lequel le HFD est un échangeur de chaleur à eau et à glace, WIHX (150) .

6. Système de rejet de chaleur selon la revendication 5, dans lequel l'eau interagit avec la glace dans le WIHX (150) et le rejet de chaleur entraîne la fonte de la glace ; et/ou comprenant également un filtre à une sortie du WIHX (150) pour empêcher la glace de sortir du WIHX (150).

7. Système de rejet de chaleur selon l'une quelconque des revendications 2 à 6, comprenant également une pompe (120) disposée entre l'échangeur de chaleur (110) et la première vanne.

8. Système de rejet de chaleur selon une quelconque revendication précédente, dans lequel le véhicule est un vaisseau spatial.

9. Procédé d'assemblage d'un système de rejet de chaleur pour un véhicule, le procédé comprenant :
agencement d'un échangeur de chaleur (110) configuré pour recevoir un liquide de refroidissement d'entrée (175) et pour délivrer un liquide de refroidissement réchauffé (115) ;
assemblage d'un dispositif de vaporisation de chaleur, HVD ;
assemblage d'un dispositif de fusion thermique, HFD ; et
configuration d'un contrôleur (105) pour diriger le liquide de refroidissement réchauffé vers le HVD ou vers le HFD sur la base d'une entrée, **caractérisé en ce que** l'entrée indique l'altitude du véhicule ou la pression ambiante.

10. Procédé selon la revendication 9, comprenant également l'agencement d'une première vanne et d'une seconde vanne, dans lequel la configuration du contrôleur comprend le contrôleur commandant la première vanne pour diriger un flux du liquide de refroidissement réchauffé vers le HVD ou vers la seconde vanne et commandant la seconde vanne pour diriger un flux du liquide de refroidissement réchauffé ou un flux d'une sortie du HVD vers le HFD ou pour diriger le flux de la sortie du HVD vers l'échangeur de chaleur en tant que liquide de refroidissement d'entrée.

11. Procédé selon la revendication 10, dans lequel le liquide de refroidissement réchauffé est de l'eau.

12. Procédé selon la revendication 11, dans lequel l'assemblage du HVD comprend l'assemblage d'un évaporateur à membrane d'eau, WME, et de préférence dans lequel l'assemblage du WME comprend l'agencement d'une membrane hydrophobe à travers laquelle l'eau s'écoule et l'évaporation de l'eau à une surface de la membrane hydrophobe entraîne un rejet de chaleur.

13. Procédé selon la revendication 11, dans lequel l'assemblage du HFD comprend l'assemblage d'un échangeur de chaleur à eau et à glace, WIHX.

14. Procédé selon la revendication 13, dans lequel l'assemblage du WIHX comprend le remplissage du WIHX avec de la glace de telle sorte que l'eau interagisse avec la glace dans le WIHX et que le rejet de chaleur entraîne la fonte de la glace ; et/ou comprenant également l'agencement d'un filtre à une sortie du WIHX pour empêcher la glace de sortir du WIHX.

15. Procédé selon l'une quelconque des revendications 10 à 14, comprenant également la disposition d'une pompe entre l'échangeur de chaleur et la première vanne.
